# EUROPÄISCHE PATENTSCHRIFT

(11) **EP 0 627 588 B1**
(45) Veröffentlichungstag und Bekanntmachung des Hinweises auf die Patenterteilung: **27.11.1996**
(21) Anmeldenummer: 93109020.3
(22) Anmeldetag: 04.06.1993
(51) Int. Cl.: F16L 5/02, H02G 3/06

(54) **Verschraubung aus Kunststoff zur Ein- und Durchführung, Abdichtung und Zugentlastung von Kabeln, Leitungen oder Schläuchen**
Plastic screw fitting for entry and extension, sealing and strain relief of cables, ducts or hoses
Raccord à vis en matière plastique pour entrée et traversée de paroi, étanchéité et décharge de traction de câbles, conduits ou tuyaux souples

(43) Veröffentlichungstag der Anmeldung: 07.12.1994
(73) Patentinhaber: Hermann Kleinhuis GmbH. & Co. KG, D-58507 Lüdenscheid (DE)
(72) Erfinder: Henniger, Dieter, D-5885 Schalksmühle (DE)
(74) Vertreter: Buse, Karl Georg, Dipl.-Phys.

(56) Entgegenhaltungen:
- DE-A- 3 535 595
- DE-A- 4 200 549

## Beschreibung

Die Erfindung bezieht sich auf eine Verschraubung gemäß des Oberbegriffes des Patentanspruchs 1.

Solche Verschraubungen sind aus mannigfachen Ausführungen bekannt. So ist durch die DE-PS 2 132 951 eine abdichtende Wanddurchführung mit Gewindenippel, Überwurfmutter und einem verschraubbaren, verformbaren und mit Längsschlitzen versehenen Dichtungseinsatz aus Kunststoff zum gas-und wasserdichten Anschließen von Rohrleitungen und durchgeführten elektrischen Kabeln bekanntgeworden, bei der der Dichtungseinsatz ebene, axiale Schlitze aufweist die tangential zur inneren Bohrung des Dichtungseinsatzes angeordnet sind. Beim bestimmungsgemäßen Gebrauch überlappen sich die geschlitzten Elemente des Dichtungseinsatzes in Umfangsrichtung fächerartig.

Es ist ferner durch die DP-PS 2 631 996 eine Verschraubung aus Kunststoff der genannten Art bekannt, bei der die teilweise übereinander sich bewegenden Klemmzungen zahnähnliche Segmente bilden, in welche zur Verdrehungssicherung zwischen Überwurfmutter und Zwischenstutzen eine Schrägverzahnung im Inneren der Überwurfmutter eingreift. Bei dieser Ausführungsform der Verschraubung soll beim Aufschrauben der Überwurfmutter die an deren Innenseite angeordnete Schrägverzahnung die freien Enden der Klemmzungen nacheinander mit einer zum Kabel hin gerichteten Kraft belasten derart, daß sich die Klemmzungen teilweise übereinander bewegen und die Zähne in die von den Klemmzungen gebildete, gezahnte Segmentierung einrasten.

Eine weitere bekannte Ausführungsform einer Kabelverschraubung ist in der DE-GM 84 15 525 offenbart. Bei dieser bekannten Kabelverschraubung bilden die Zungen bzw. Klemmzungen einen Klemmzungenring. Dabei ist die Form mindestens einer dieser Klemmzungen derart getroffen, daß bei einwirkendem Überwurfmutterdruck diese selektive Klemmzunge aus dem Ringverbund der restlichen Klemmzungen in Richtung auf das eingeführte Kabel getrieben wird derart, daß sich zwischen dem Kabel einerseits und dem nach innen auf das Kabel gepreßten Klemmzungenwirkbund andererseits eine unrunde Beziehung ergibt. Dabei ist vorgesehen die Segmentierung der angrenzend aneinanderstehenden Klemmzungen so zu treffen, daß für mindestens eine der Klemmzungen eine beidseitig wirkende Schräge-Ebene-Konfiguration gebildet ist, die bei einwirkendem Überwurfmutterdruck dieser eine Klemmzunge aus dem Ringverbund der restlichen Klemmzungen heraus und in Richtung auf das eingeführte Kabel treibt. Bei dieser bekannten Ausführungsform der Kabelverschraubung wird somit bewußt eine Verformwirkung auf das Kabel od. dgl. ausgeübt, so daß sich insgesamt gesehen eine komplementär unrunde Form von Kabeldichtung und Klemmzungenwirkverbund ergibt.

Durch die DE 42 00 549 C1 ist eine Kabelverschraubung mit einer Schraubhülse und Klemmfingern bekanntgeworden, deren Hüllkurve in Gebrauchsstellung unrund ist. Um dieses zu erreichen ist an einer, eine sich verjüngenden Form aufweisenden, Druckfläche der Gegenhülse oder Überwurfmutter zumindestens ein Verformungskörper oder Höcker angeordnet der vorspringt. Dieser Verformungskörper hat in Umfangsrichtung eine solche Breite, das er wenigstens einen Klemmfinger mehr oder stärker als die Nachbarfinger radial nach innen verformt und somit eine Verdrehsicherung der Kabelverschraubung gegenüber dem Kabel oder dem Schutzschlauch bewirkt.

Durch die DE 35 35 595 Cl ist eine Verschraubung der eingangs näher gekennzeichneten Art bekanntgeworden bei der die Breite der Zungen des Zwischenstutzens vom Fuß der Zunge in Richtung auf das freie Ende hin abnimmt und daß einige der Zungen an ihrem freien Ende einen quer zu ihrer Längserstreckung verlaufenden Klemmbereich aufweisen dessen Längenabmessungen die Breite der Zunge am freien Ende übersteigen. Durch diese bekannte Ausbildung der Zungen ergibt sich für die zwischen den Zungen liegende Schlitze zwangsläufig eine solche Gestalt, daß sie keine parallel zueinander verlaufenden Flanken haben, sondern in Draufsicht gesehen keilförmig gestaltet sind. Dabei hat der am freien Ende der benachbarten Zungen vorhandene keilförmige Schlitz die größte Breite. Die quer zu den Zungen verlaufenden Klemmbereiche wirken mit der Umfangsfläche des ringförmigen Dichtungskörpers zusammen und besorgen im Zusammenwirken mit Bereichen des Dichtungskörpers das Abdichten und die Zugentlastung des eingeführten Kabels.

Diese bekannte Ausführungsform einer Kabelverschraubung hat an sich den Vorteil, daß die Zungen, vor allen in ihrem oberen Bereich vielseitigen Spielraum haben, so daß eine Anpassung an Kabel, Schläuche od. dgl. mit unterschiedlichen Durchmessern möglich ist. Ferner hat diese Ausbildung der Kabelverschraubung den Vorteil, daß sich die Seitenwände benachbarter Zungen nicht schon nach kurzem Weg aneinander legen und so an ihrer Weiterbewegung gehindert werden. In diesem Falle würde sich eine ungenügende Abdichtung und Zugentlastung ergeben. Schließlich hat diese bekannte Ausführungsform der Kabelverschraubung den Vorteil, daß durch die verhältnismäßig großen Längenabmessungen sich eine große Wirkfläche ergibt, was sich vorteilhaft für die Dichtungseigenschaften und für die Zugentlastung auswirkt.

Bei der bekannten Kabelverschraubung dieser Art überragt in der Regel der Klemmbereich die Breite der Zunge nach beiden Seiten hin. Diese Überragen erfolgt normalerweise um den gleichen Betrag, so daß von den Seitenflächen der Zunge aus gesehen ein gleich weites Überstehen der Klemmbereiche vorhanden ist.

Die vorliegende Erfindung will die Kabelverschraubung nach der DE 35 35 595 C1 weiterentwickeln und zwar so, daß einerseits die angeführten Vorteile dieser bekannten Kabelverschraubung beibehalten bleiben, daß aber andererseits in der Praxis auftretende Mängel dieser bekannten Ausfühjungsform einer Kabelverschraubung beseitigt werden. Dabei soll dieses Ziel in einfacher und wirtschaftlicher Weise erzielt werden.

Zur Lösung dieser Aufgabe wird erfindungsgemäß eine Verschraubung mit den Merkmalen des Patentanspruchs 1 vorgeschlagen.

Durch die erfindungsgemäße Ausbildung einer Kabelverschraubung ergeben sich im Vergleich mit derjenigen nach DE 35 35 595 erhebliche Vorteile, wobei auf der anderen Seite die an sich vorhandenen Vorteile dieser bekannten Kabelverschraubung beibehalten bleiben. Letzteres ist insbesondere für die keilförmigen Schlitze und die dadurch erzielten Vorteile der Fall.

Auf der anderen Seite wird eine andere Ausbildung der Klemmbereiche der Zunge und der Anordnung durchgeführt, wodurch sich bessere Ergebnisse hinsichtlich der Eigenschaften der Kabelverschraubung ergeben. Insbesondere hat im Gegensatz zu der Ausführungsform der Kabelverschraubung nach DE 35 35 595 C1 nun jede Zunge des Zwischenstutzens einen Klemmbereich. Darüber hinaus ist es wichtig, daß die Klemmbereiche aller Zungen ein und desselben Zwischenstutzens an dieser einseitig in die gleiche Richtung zeigend angeordnet sind. Dabei ist es ferner von Bedeutung, daß jede Zunge in ihrer Ruhelage mit ihrem Klemmbereich jeweils benachbarte Zungen bereichsweise überlappt. Durch diese Anordnung ergeben sich, wie durchgeführte Versuche gezeigt haben, erheblich bessere Abdichtungs- und Klemmeigenschaften der Kabelverschraubung im Zusammenwirken mit den Leitungen, Kabeln, Rohren od. dgl.. Von Vorteil ist es auch, die Klemmbereiche aller Zungen des Zwischenstutzens in Festdrehrichtung der Überwurfmutter liegen zu lassen. Diese Ausgestaltung hat, wie Versuche ergeben haben, die besten Ergebnisse gebracht, auch in Vergleich mit einer Ausführungsform bei der die Klemmbereiche entgegen der Festdrehrichtung der Überwurfmutter angeordnet sind.

Bei der bevorzugten Ausführungsform der Erfindung ist ferner vorgesehen, daß die inneren Begrenzungsflächen der Klemmbereiche aller Zungen des Zwischenstutzens im wesentlichen einen Kreis begrenzen. Dadurch ergibt sich eine große wirksame Kontaktfläche im Zusammenwirken mit der benachbarten Umfangsfläche.

Es empfiehlt sich die in Festdrehrichtung der Überwurfmutter vordere Begrenzungswand jeder Zunge gegenüber der vorderen Partie des Klemmbereiches zurückbringen zu lassen. Auf diese Weise entsteht ein Absatz. An diesem Absatz können beim bestimmungsgemäßen Gebrauch der Kabelverschraubung Bereiche der benachbarten Zunge zur Anlage kommen, nämlich dann, wenn ein starkes Zusammendrücken der Zungen des Zwischenstutzens durch die Überwurfmutter erfolgt.

Bei der bevorzugten Ausführungsform der Erfindung verlaufen die innere und äußere Begrenzungsfläche der vorderen Partie des Klemmbereiches jeder Zunge geneigt zueinander und münden jeweils in eine Spitze ein. Diese Spitze und die ihr benachbarten Partien des Klemmbereiches legen sich in der Ruhelage der Verschraubung jeweils an die benachbarte Zunge an.

Es empfiehlt sich die Oberfläche der Zunge absatzlos in die Oberfläche des Klemmbereiches übergehen zu lassen. Auf diese Weise liegt die Stirnfläche aller Zungen des Zwischenstutzens einschließlich der Oberfläche der Klemmbereiche in ein und derselben Ebene.

Was die Breite der Klemmbereiche angeht, so ist in Anpassung an die jeweiligen Verhältnisse und Wünsche des Benutzers eine Variation möglich. Auf alle Fälle ist der am oberen Ende der Zunge seitlich angeordnete Klemmbereich so bemessen, daß er sich nur über einen Teil der Länge der Zunge erstreckt. In der Regel ist die Breite des Klemmbereiches etwa ein Drittel bis ein Viertel kleiner als die Länge der zugehörigen Zunge.

Aus wirtschaftlichen und auch aus technischen Gründen empfiehlt es sich sämtliche Zungen des Zwischenstutzens und alle Klemmbereiche der Zunge untereinander gleich zu gestalten.

In der Zeichnung ist die Erfindung in einem Ausführungsbeispiel dargestellt, und zwar zeigen:
- Fig. 1: in explosionsartiger Darstellung, teilweise in Seitenansicht und teilweise im Schnitt die erfindungsgemäße Verschraubung (Kabelverschraubung), dabei ist der Schnitt jeweils in Längsrichtung der Einzelteile der Kabelverschraubung gelegt,
- Fig. 2: in schaubildlicher Darstellung die Einzelteile der erfindungsgemäßen Kabelverschraubung vor ihrem Zusammenbau,
- Fig. 3: in vergrößertem Maßstab und in Draufsicht den Zwischenstutzen der erfindungsgemäßen Kabelverschraubung in der Ruhelage der zugehörigen Zungen des Zwischenstutzens bei fehlender Überwurfmutter, und
- Fig. 4: ebenfalls in vergrößertem Maßstab und in Draufsicht den Zwischenstutzen nach der Fig. 3, wobei jedoch auf diesem nunmehr die Überwurfmutter angebracht ist und die Zungen in einer wirksamen Lage wiedergegegeben sind.

Es sei zunächst erwähnt, daß die Verschraubung aus Kunststoff - die sogenannte Kabelverschraubung - zur Ein- und Durchführung, ferner zur Abdichtung und Zugentlastung von Kabeln, Leitungen, Schläuchen, Rohren od.dgl. Verwendung findet. Eine solche Kabelverschraubung besteht aus einem Zwischenstutzen mit dem zugeordneten Dichtungskörper und einer Überwurfmutter. Dabei sind diesen Teilen Mittel zugeordnet, um die Überwurfmutter unter Zwischenschaltung des Dichtungskörpers mit dem Zwischenstutzen lösbar zu verbinden. Darüber hinaus ist der Zwischenstutzen ebenfalls mit Verbindungsmitteln versehen, die sein Befestigen an irgendeinem Träger, wie einer Wand od.dgl., zulassen. Auf die Darstellung der mit der Kabelverschraubung zusammenwirkenden Teile, wie Kabel, Leitungen, Schläuchen od.dgl., ist verzichtet. Es können hierbei die in der einschlägigen Praxis üblichen Ausführungsformen dieser Einrichtungen benutzt werden.

Der Zwischenstutzen ist generell mit 10 bezeichnet und einstückig aus einem der in der Elektroindustrie gebräuchlichen Werkstoffe, insbesondere Kunststoffe, hergestellt. Der Zwischenstutzen 10 wird von einem mittleren Durchgang 27 durchsetzt. Er hat ein Aufnahmegewinde 13 und ein Außengewinde 14 die durch einen Bund 15, beispielsweise durch einen Sechskant, voneinander getrennt sind. Das Außengewinde 14 dient dabei im Zusammenwirken mit einem Gegengewinde, den Zwischenstutzen 10 und damit die gesamte Kabelverschraubung an einem Träger, z. B. an einer Wand od.dgl., festzulegen.

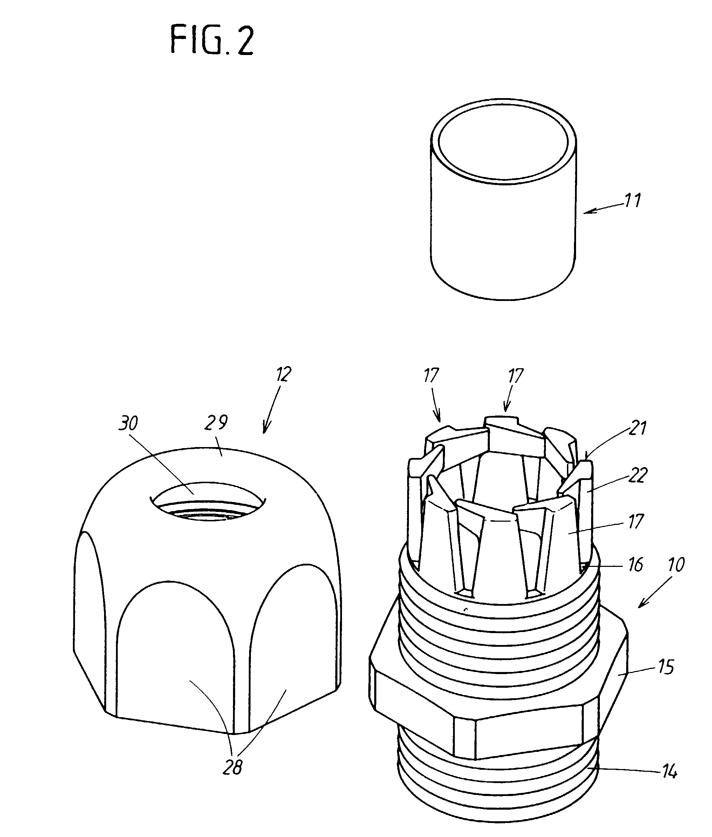

Das Aufnahmegewinde 13, welches oberhalb des Bundes 15 angeordnet ist, wirkt demgegenüber mit dem Innengewinde 31 einer Überwurfmutter 12 zusammen. Wie die Fig. 2 der Zeichnungen am besten erkennen läßt, ist die Überwurfmutter 12 in ihrem unteren Bereich als Sechskant 28 ausgebildet. Die obere Stirnfläche der Überwurfmutter 12 ist mit 29 gekennzeichnet und abgerundet. In der Mitte der Stirnfläche 29 liegend ist eine Einführungsöffnung 30 von kreisrundem Querschnitt vorgesehen, durch die ein Kabel, Rohr od.dgl. hindurchgreifen kann. Die sechskantige Ausbildung 28 der Überwurfmutter 12 hat den Vorteil, daß dadurch der Angriff eines Werkzeuges erleichtert wird. Das Außengewinde 13 des Zwischenstutzens 10 und das dazugehörige Innengewinde 31 der Überwurfmutter 12 kann eine bekannte Ausbildung haben, beispielsweise kann es als Pg-Gewinde ausgebildet sein. Daneben ist aber auch noch die Gestalt als Sägegewinde denkbar. Letztere Ausführungsform wird z.B. dann benutzt, wenn es um die Verbesserung der Aufnahme von Axialkräften geht.

Wie insbesondere aus der Fig. 2 der Zeichnung ersichtlich, hat das Außengewinde 13 des Zwischenstutzens 10 eine Stirnfläche 16. An diese Stirnfläche 16 des Aufnahmegewindes 13 des Zwischenstutzens 10 schließen sich generell mit 17 bezeichnete Zungen an. Im gewählten Ausführungsbeispiel sind insgesamt acht solcher Zungen 17 vorhanden, die alle untereinander gleichgestaltet sind. Zwischen zwei benachbarten Zungen 17 ist jeweils ein Schlitz 18 angeordnet.

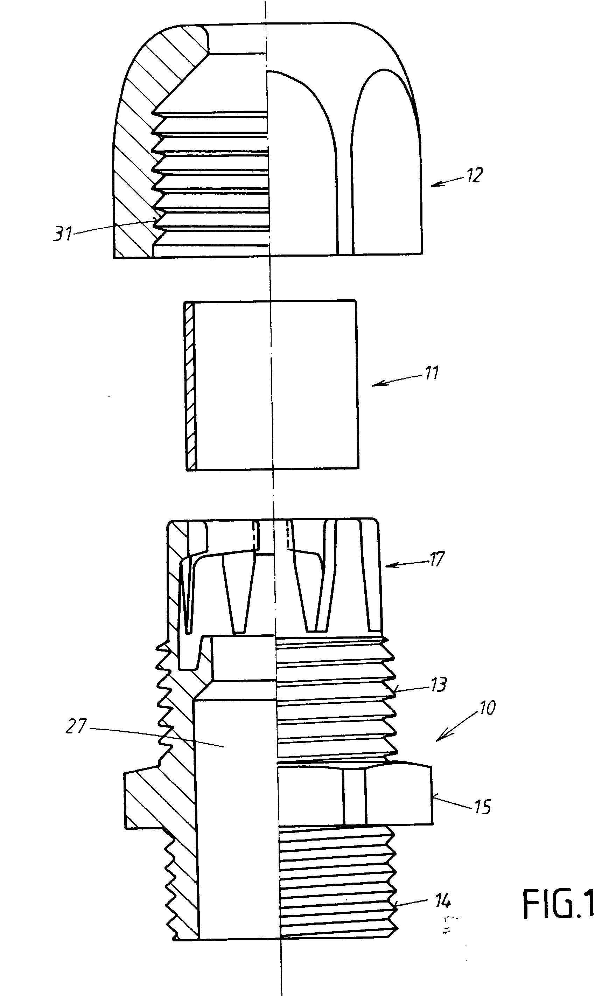

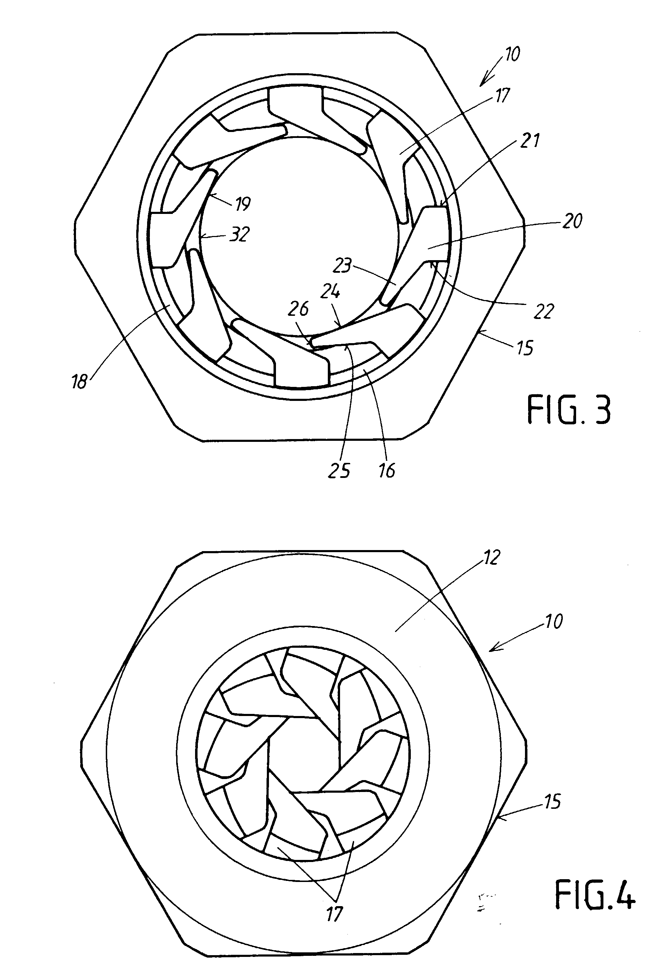

Aus den Fig. 1 und 2 der Zeichnung ergibt sich, daß die Breite der Zungen 17 von ihrem Fuß in Richtung auf das freie Ende hin abnimmt. Dadurch erhalten auch die zwischen zwei Zungen 17 liegenden Schlitze eine in Draufsicht gesehen keilförmige Gestalt, nur daß die kleinste Breite des Schlitzes 18 der Stirnfläche 16 des Außengewindes 13 des Zwischenstutzens 10 benachbart ist.
Wie die Fig. 2 und 3 der Zeichnungen am besten erkennen lassen, weist erfindungsgemäß jede Zunge 17 des Zwischenstutzens 10 einen Klemmbereich 19 auf. Die Klemmbereiche 19 aller Zungen 17 ein und desselben Zwischenstutzens 10 sind an dieser einseitig in die gleiche Richtung zeigend angeordnet. Es ist ferner aus den genannten Figuren zu erkennen, daß jede Zunge 17 in ihrer Ruhelage mit ihrem Klemmbereich 19 die jeweils benachbarte Zunge 17 wenigstens bereichsweise überlappt.

In dem Ausführungsbeispiel nach den Zeichnungen ist vorgesehen, daß die Klemmbereiche 19 aller Zungen 17 des Zwischenstutzens 10 in Festdrehrichtung der Überwurfmutter 12 liegen.

Darüber hinaus ist aus der Fig. 3 der Zeichnung erkennbar, daß die inneren Begrenzungsflächen 24 der Klemmbereiche 19 aller Zungen 17 des Zwischenstutzens 10 einen Kreis begrenzen; dieser ist in der Fig. 3 mit 32 bezeichnet.

Die in Festdrehrichtung der Überwurfmutter 12 vordere Begrenzungswand 22 jeder Zunge 17 springt gegenüber der vorderen Partie des Klemmbereiches 19 zurück.

Ferner ist erfindungsgemäß vorgesehen, daß die innere und die äußere Begrenzungsfläche 24 bzw. 25 der vorderen Partie des Klemmbereiches 19 jeder Zunge 17 geneigt zueinander verlaufen. Die genannten Begrenzungsflächen 24 bzw. 25 münden jeweils in eine Spitze 26 ein. Diese Spitze 26 und die sich daran anschließende vordere Partie des Klemmbereiches 19 überlappen sich jeweils mit der benachbarten Klemmfläche 19 einer Zunge 17.

Im gewählten Ausführungsbeispiel ist auch vorgesehen, daß die Oberfläche 20 der Zunge 17 absatzlos in die Oberfläche 23 des Klemmbereiches 19 übergeht. Daher liegen die Oberflächen 20 der Zungen 17 und die Oberfläche 23 der Klemmfläche 19 in ein und derselben Ebene.

Aus der Fig. 2 der Zeichnung ist am besten zu erkennen, daß, wie grundsätzlich bekannt, die Zungen 17 des Zwischenstückes 10 in Draufsicht gesehen keilförmig gestaltet sind. Dabei ist die hintere Begrenzungswand der Zunge 17 jeweils mit 21, die vordere Begrenzungswand der gleichen Zunge dagegen mit 22 bezeichnet. Die Ausdrücke "vorne" und "hinten" beziehen sich jeweils auf die Festdrehrichtung der Überwurfmutter 12.

Im gewählten Ausführungsbeispiel der Zeichnungen sind insgesamt acht Zungen 17 dem Zwischenstutzen 10 zugeordnet. Die Zungen 17 sind dabei alle untereinander gleichgestaltet und in regelmäßiger Anordnung an der Stirnfläche 16 des Außengewindes 13 des Zwischenstutzens 10 angeordnet. Auch die Klemmbereiche 19 aller Zungen 17 des Zwischenstutzens 10 sind untereinander gleichgestaltet. Die Höhe der Klemmbereiche 19 der Zungen 17 sind dabei wesentlich kürzer gehalten als die Länge der Zunge 17, wie dies z.B. aus der Fig. 2, rechte Seite ersichtlich ist.

Es bleibt noch nachzutragen, daß zu der Kabelverschraubung auch ein Dichtungskörper 11 gehört. Dieser wirkt in bekannter Weise mit dem Zwischenstutzen 10 bzw. den daran angeordneten Zungen 17 mit den Klemmbereichen 19 zusammen. Im Ausführungsbeispiel nach der Fig. 2 der Zeichnung ist der Dichtungskörper 11 als zylindrischer Hohlkörper ausgebildet, der aus einem gummielastischem Werkstoff in bekannter Weise gefertigt ist.

Die Fig. 3 der Zeichnung zeigt die Ausgangslage der Zungen 17 des Zwischenstutzens 10. Daraus ergibt sich, daß die vorderen Partien des Klemmbereiches 19 - dies ist die innere Begrenzungsfläche 24 des Klemmbereiches 19 - auf einem Kreis 32 liegen.

In der Fig. 4 der Zeichnung ist nicht nur die Überwurfmutter 12 auf dem Aufnahmegewinde 13 des Zwischenstutzens 10 angebracht, sondern diese Überwurfmutter 12 ist auch so festgezogen, daß die Zungen in Richtung auf den Mittelpunkt des Durchganges 27 des Zwischenstutzens 10 bewegt sind. Die Spitzen 26 der vorderen Partien des Klemmbereiches 19 sind dabei nicht nur verformt, sondern sie haben sich auch auf der benachbarten inneren Begrenzungsfläche 24 der Zunge 17 so verschoben, daß nur noch ein durchmessermäßig kleiner Durchlaß entsteht. In dieser Lage sind auch die Zungen 17 durch Krafteinwirkung der Überwurfmutter 12 in Richtung auf den Mittelpunkt des Zwischenstutzens verschoben. Der Einfachheit halber ist in der Fig. 4 der Zeichnung auf die Darstellung des Dichtungsringes 11 verzichtet.

Dies bedeutet, daß beim Anbringen der Überwurfmutter 12, welches erfolgt, nachdem ein Kabel oder eine Leitung in die Kabelverschraubung eingeführt bzw. durchgeführt ist, die Zungen 17 nach innen in Richtung auf die Umfangsfläche des Dichtungskörpers 11 und damit des Kabels od.dgl. gedrückt werden. Dabei kommen die Klemmbereiche 19 der Zungen 17 mit der Umfangsfläche des Dichtungskörpers 11 in Wirkverbindung. Auf diese Weise wird, wie durchgeführte Versuche ergeben haben, ein ordnungsgemäßes Abdichten des Kabels erreicht, zugleich auch die gewünschte Entlastung des Kabels gegen Herausziehen (Zugentlastung). Dabei erfolgt ein automatisches Anpassen der Lage der zungen 17 und deren Klemmbereiche an den Durchmesser des abzudichtenden bzw. festzuhaltenden Kabels. Dabei ist von Vorteil, daß eine verhältnismäßig große Klemmbereichsfläche vorhanden ist. Diese Klemmfläche ergibt sich aus der Summe der Einzelflächen der Klemmbereiche 19 der Zungen 17. Die nach oben hin verbreiterten Schlitze 18 geben den Zungen 17, wie an sich bekannt, eine große seitliche Bewegungsmöglichkeit. Da die Klemmbereiche 19 in Richtung auf das Innere den Zungen 17 vorgelagert sind, stören sie die Seitenbewegung der Zungen 17 nicht.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Dies gilt insbesondere für die Ausbildung der Zungen 17 und der ihnen zugeordneten Klemmbereiche 19. Diese Zungen bzw. Klemmbereiche können sowohl hinsichtlich ihrer Anzahl als auch hinsichtlich ihrer Gestalt und Anordnung variiert werden. Auch kann die Erfindung bei anderen an sich bekannten Kabelverschraubungen angewandt werden.

### Bezugszeichenliste:

- 10: Zwischenstutzen
- 11: Dichtungskörper
- 12: Überwurfmutter
- 13: Aufnahmegewinde (für 12)
- 14: Außengewinde (an 10)
- 15: Bund
- 16: Stirnfläche
- 17: Zunge
- 18: Schlitz (zwischen 17)
- 19: Klemmbereich (von 17)
- 20: Oberfläche (von 17)
- 21: hintere Begrenzungswand (von 17)
- 22: vordere Begrenzungswand (von 17)
- 23: Oberfläche (von 19)
- 24: innere Begrenzungsfläche (von 19)
- 25: äußere Begrenzungsfläche (von 19)
- 26: Spitze
- 27: Durchgang (von 10)
- 28: Sechskant (von 12)
- 29: Stirnfläche (von 12)
- 30: Einführungsöffnung (von 12)
- 31: Innengewinde (von 12)
- 32: Kreis

## Patentansprüche

1. Verschraubung aus Kunststoff zur Ein- und Durchführung, Abdichtung und Zugentlastung von Kabeln, Leitungen oder Schläuchen, bestehend aus einem Zwischenstutzen (10) mit zugeordnetem Dichtungskörper (11) und einer Überwurfmutter (12), wobei am hohlzylindrischen Zwischenstutzen (10) durch Schlitze voneinander getrennte Zungen (17) koaxial angeordnet sind, welche beim Betätigen der Überwurfmutter (12) den Dichtungskörper (11) gegen die Umfangsfläche des eingeführten Kabels od.dgl. pressen, und wobei die Breite der Zungen (17) von ihrem Fuß in Richtung auf das freie Ende abnimmt, und die Zungen (17) einen quer zu ihrer Längserstreckung verlaufenden Klemmbereich (19) aufweisen,
**dadurch gekennzeichnet**,
daß jede Zunge (17) des Zwischenstutzens (10) einen Klemmbereich (19) aufweist, daß die Klemmbereiche (19) der Zungen (17) des Zwischenstutzens (10) an dieser einseitig in die gleiche Richtung zeigend angeordnet sind, daß jede Zunge (17) in ihrer Ruhelage mit ihrem Klemmbereich (19) die jeweils benachbarte Zunge (17) wenigstens bereichsweise überlappt, und daß die Klemmbereiche (19) aller Zungen (17) des Zwischenstutzens (10) in Festdrehrichtung der Überwurfmutter (12) liegen.

2. Verschraubung nach Anspruch 1, dadurch gekennzeichnet, daß die inneren Begrenzungsflächen (24) der Klemmbereiche (19) aller Zungen (17) des Zwischenstutzens (10) im wesentlichen einen Kreis begrenzen.

3. Verschraubung nach Anspruch 1 oder 2, dadurch gekennzeichnet, daß die in Festdrehrichtung der Überwurfmutter (12) vordere Begrenzungswand (22) jeder Zunge (17) gegenüber der vorderen Partie des Klemmbereiches (19) zurückspringt.

4. Verschraubung nach den Ansprüchen 1 bis 3, dadurch gekennzeichnet, daß die innere und äußere Begrenzungsfläche (24 bzw 25) der vorderen Partie des Klemmbereiches (19) jeder Zunge (17) geneigt zueinander verlaufen und jeweils in eine Spitze (26) einmünden.

5. Verschraubung nach den Ansprüchen 1 bis 4, dadurch gekennzeichnet, daß die Oberfläche (20) der Zunge (17) absatzlos in die Oberfläche (23) des Klemmbereiches (19) übergeht.

6. Verschraubung nach den Ansprüchen 1 bis 5, dadurch gekennzeichnet, daß der am oberen Ende der Zunge (17) angeordnete Klemmbereich (19) sich nur über einen Teil der Länge der Zunge (17) erstreckt.

7. Verschraubung nach den Ansprüchen 1 bis 6, dadurch gekennzeichnet, daß sämtliche Zungen (17) des Zwischenstutzens (10) und alle Klemmbereiche (19) dieser Zungen (17) untereinander gleichgestaltet sind.

## Claims

1. Plastic screw fitting for entry and extension, sealing and strain relief of cables, ducts or hoses, consisting of an intermediate connection piece (10) with associated sealing body (11) and a cap nut (12), tongues (17) separated from each other by slits arranged co-axially on the cylindrical hollow intermediate connection piece (10), said tongues pressing the sealing body (11) against the circumferential face of the fed in cable or suchlike when the union nut (12) is actuated, the width of the tongues (17) decreasing from their bases in the direction of the free ends, and the tongues (17) showing a clamping area (19) which runs transverse to their longitudinal extension,
characterised by the fact
that each tongue (17) of the intermediate connection piece (10) shows a clamping area (19), that the clamping areas (19) of the tongues (17) of the intermediate connection piece (10) are arranged on this on one side pointing in the same direction, that each tongue (17) in its position of rest, with its clamping area (19), overlaps the respective adjacent tongue (17) at least in certain areas, and that the clamping areas (19) of all the tongues (17) of the intermediate connection piece (10) lie in the tightening direction of the union nut (12).

2. Screw fitting according to claim 1 characterised by the fact that the inner limiting faces (24) of the clamping areas (19) of all the tongues (17) of the intermediate connection piece (10) essentially delimit a circle.

3. Screw fitting according to claims 1 or 2 characterised by the fact that the front limiting wall (22) of each tongue (17) in the tightening direction of the union nut (12) stands back opposite the front part of the clamping area (19).

4. Screw fitting according to claims 1 to 3 characterised by the fact that the inner and outer limiting faces (24 or 25) of the front part of the clamping area (19) of each tongue (17) run inclined towards each other and in each case taper to a point (26).

5. Screw fitting according to claims 1 to 4 characterised by the fact that the surface (20) of the tongue (17) shows a shoulderless transition to the surface (23) of the clamping area (19).

6. Screw fitting according to claims 1 to 5 characterised by the fact that the clamping area (19) arranged at the top end of the tongue (17) only extends over part of the length of the tongue (17).

7. Screw fitting according to claims 1 to 6 characterised by the fact that all the tongues (17) of the intermediate connection piece (10) and all the clamping area (19) of these tongues (17) are designed and configured in the same way as each other.

## Revendications

1. Raccord à vis en matière plastique, pour réaliser l'entrée et la traversée de paroi, l'étanchéité et pour absorber les efforts de traction de câbles, de conduites ou de tubes flexibles, constitué d'un raccord intermédiaire (10) muni d'un corps d'étanchéité (11) associé et d'un écrou borgne (12), des languettes (17), séparées les unes des autres par des fentes, étant disposées coaxialement sur le raccord intermédiaire cylindrique creux (10), languettes qui, lors de l'actionnement de l'écrou d'accouplement (12) pressent le corps d'étanchéité (11) contre la surface périphérique du câble ou analogue introduit à travers l'écran, et dans lequel raccord la largeur des languettes diminue depuis leur pied jusqu'à leur extrémité libre et les languettes (17) présentant une zone de serrage (19) s'étendant transversalement par rapport leur longueur, caractérisé en ce que chaque languette (17) du raccord intermédiaire (10) présente une zone de serrage (19), en ce que les zones de serrage (19) des languettes (17) du raccord intermédiaire (10) sont disposées sur celui-ci tournées d'un côté dans la même direction, en ce que chaque languette (17) chevauche au moins par zones, en position de repos, par sa zone de serrage (19) la languette (17) contigüe, et en ce que les zones de serrage (19) de toutes les languettes (17) du raccord intermédiaire (10) sont situées dans le sens de rotation de blocage de l'écrou d'accouplement (12).

2. Raccord à vis selon la revendication 1, caractérisé en ce que les surfaces intérieures (24) délimitant les zones de serrage (19) de toutes les languettes (17) du raccord intermédiaire (10) délimitent sensiblement un cercle.

3. Raccord à vis selon la revendication 1 ou 2, caractérisé en ce que la paroi de délimitation (22), située à l'avant dans le sens de rotation de blocage de l'écrou d'accouplement (12), de chaque languette (17) est située en arrière par rapport à la partie avant de la zone de serrage (19).

4. Raccord à vis selon les revendications 1 à 3, caractérisé en ce que les surfaces de délimitation intérieure et extérieure (24 ou 25) de la partie avant de la zone de serrage (19) de chaque languette (17) forment un angle l'une par rapport à l'autre et se rejoignent chaque fois en formant une pointe (26).

5. Raccord à vis selon les revendication 1 à 4, caractérisé en ce que la surface (20) de la languette (17) se raccorde sans décrochement à la surface (23) de la zone de serrage (19).

6. Raccord à vis selon les revendications 1 à 5, caractérisé en ce que la zone de serrage (19) disposée à l'extrémité supérieure de la languette (17) ne s'étend que sur une partie de la longueur de la languette (17).

7. Raccord à vis selon les revendications 1 à 6, caractérisé en ce que l'ensemble des languettes (17) du raccord intermédiaire (10) et toutes les zones de serrage (19) de ces languettes (17) présentent entre elles la même configuration.
